# EUROPEAN PATENT SPECIFICATION

(11) **EP 2 276 281 B1**
(45) Date of publication and mention of the grant of the patent: **13.02.2019**
(21) Application number: 09741660.6
(22) Date of filing: 05.05.2009
(51) Int. Cl.: H04W 12/08, H04L 29/06, H04W 92/10

(54) **METHOD, SYSTEM AND DEVICE FOR OBTAINING A TRUST TYPE OF A NON-3GPP ACCESS SYSTEM**
VERFAHREN, SYSTEM UND VORRICHTUNG FÜR DEN ERHALT EINES VERTRAUENSWÜRDIGEN TYPS EINES NICHT-3GPP-ZUGANGSSYSTEMS
PROCÉDÉ, SYSTÈME ET DISPOSITIF POUR OBTENIR UN TYPE DE CONFIANCE D'UN SYSTÈME D'ACCÈS NON-3GPP

(30) Priority: 05.05.2008 CN 200810105783
(43) Date of publication of application: 19.01.2011
(73) Proprietor: China Academy of Telecommunications Technology, Haidian District, Beijing 100191 (CN)
(72) Inventor: XU, Hui, Beijing 100083 (CN)
(74) Representative: Thinat, Michel
(86) International application number: PCT/CN2009/000491
(87) International publication number: WO 2009/135385

(56) References cited:
- WO-A1-2006/135216
- WO-A1-2009/135371
- CN-A- 101 106 812
- CN-A- 101 141 822
- CN-A- 101 472 263
- ERICSSON: "UE detection of trusted/untrusted properties of non-3GPP IP Access", 3GPP DRAFT; S2-083218_DP_TRUSTED_UNTRUSTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080502, 2 May 2008 (2008-05-02), XP050265456, [retrieved on 2008-05-02]
- "3rd Generation Partnership Project; Technical Specification Group Core Network and Terminals; Access to the 3GPP Evolved Packet Core (EPC) via non-3GPP access networks; Stage 3; (Release 8)", 3GPP STANDARD; 3GPP TS 24.302, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0, 1 May 2008 (2008-05-01), pages 1-24, XP050365250,
- SAMSUNG: "Principles of decisions on trusted/untrusted", 3GPP DRAFT; S2-083809-TRUSTED_UNTRUSTED_CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Prague; 20080502, 2 May 2008 (2008-05-02), XP050265983, [retrieved on 2008-05-02]

## Description

### FIELD OF THE INVENTION

The invention relates to the field of communication technology, in particular to a method, a system and a device for obtaining a trust type of a non-3GPP (3rd Generation Partnership Project) access system.

### BACKGROUND OF THE INVENTION

With the continuous development and popularization of non-3GPP access technologies, such as WLAN (Wireless Local Area Network), Wimax (Worldwide Interoperability For Microwave Access) etc., the future development trend of 3GPP focuses on how to effectively use the existing non-3GPP access technologies and non-3GPP access systems to provide users with access services. In the project of SAE (System Architecture Evolution) proposed by 3GPP, IP-based 3GPP services will be provided by different access technologies, thereby it is required to support seamless mobility among different access technologies, such as seamless mobility between 3GPP access system and non-3GPP access system (e.g. WLAN). For example, a driver can enjoy the access service provided by UTRAN (UMTS Territorial Radio Access Network) during the travel, and access the network via WLAN access system when he is in the building. In this way the cost is reduced, and the capability of 3GPP system is enhanced.

In SAE system, non-3GPP access system is divided into Trusted system and Untrusted system, an UE (User Equipment) uses different processing methods for different trust types of the non-3GPP access systems. When UE accessess to EPS (Evolved Packet System) via the Untrusted non-3GPP access system, UE can access the system via ePDG (evolved pocket gate) entity, and it is necessary to build IPSEC tunnel (IP security tunnel) between UE and ePDG. If UE accesses to EPS via the Trusted non-3GPP access system, the ePDG entity is not necessary, and it is not necessary to build the corresponding IPSEC tunnel.

The trust type information of the non-3GPP access system is very important and essential for UE which accessed to the EPS system. If the UE cannot obtain the trust type of the non-3GPP access system that from EPS system point of view, it will not know whether to select an ePDG or not, thus leading to the failure of connection.

Existing 3GPP protocol does not provide the method of obtaining the trust type of a non-3GPP access system. Subsequently, considering the handover between the 3GPP and the non 3gpp access system, the current 3GPP protocol will be briefly explained. It can be seen from this example that the current 3GPP protocol does not provide any method of obtaining a trust type of a non-3GPP access system.

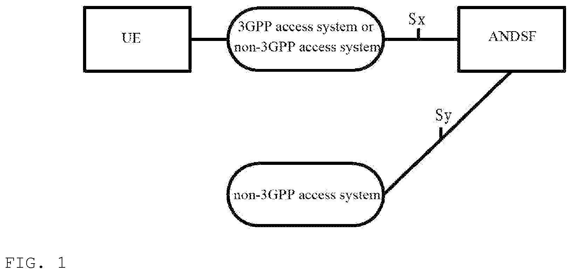

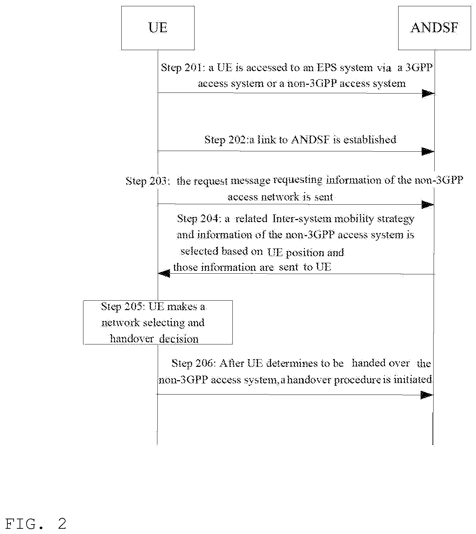

Figure 1 shows the system architecture for the handover between the non 3GPP access system and 3GPP access system , when UE hands over to the non-3GPP access system, UE can discover and select a suitable non-3GPP access system by a network discovering and selecting procedure. Figure 2 shows the handover procedure with the following steps:
Step 201: UE has accessed to EPS system via a 3GPP access system or a non-3GPP access system.
Step 202: When it is necessary to perform a handover due to some conditions, a connection between UE and ANDSF (Access Network Discovery and Selection Function) is established. If UE does not have the address of the ANDSF entity, it shall initiate the ANDSF discovering procedure to discover an IP address of ANDSF entity. The ANDSF entity is an essential entity for the UE accessing the non 3gpp access system, it contains the data management and control function used for providing UE with discovering and selecting access system according to the operator's strategy. ANDSF may provide Inter-system mobility strategy and the non-3GPP access system information to UE, wherein information of the non-3GPP access system can be the non-3GPP access type (WLAN or Wimax), the non-3GPP access network identification (e.g. SSID of WLAN), PLMN for providing access and the preferable type of the non-3GPP etc.
Step 203: UE sends a request message to ANDSF for requesting the information of the non-3GPP access network.
Step 204: ANDSF selects the related the Inter-system mobility strategy and the information of the non-3GPP access system according to UE's position and sends information to the UE.
Step 205: UE makes a network selecting and handover decision.
Step 206: After UE has determined to handover to the non-3GPP access system, the handover procedure is initiated.

It can be seen from the above procedure that the ANDSF only sends the information of the non-3GPP access system and the Inter-system mobility strategy to UE, and it does not inform UE of the trust type of the non-3GPP access system, when UE hands over to the non-3GPP access system. The above procedure shows handover procedure from 3GPP access system or non-3GPP access system to a non-3GPP access system. Similarly, in the case that UE accesses EPS system via non 3gpp access system, UE cannot obtain the trust type of the non-3GPP access system either.
The disadvantage of the current technology is that UE can not obtain the trust type of the non-3GPP access system which is very important and essential for UE to access to the EPS system via the non-3GPP access system. In order to ensure UE accessing via non-3GPP system, an efficient, simple and quick way to obtaining the trust type of the non-3GPP access system is necessary.

3GPP TSG SA WG2 Meeting #65 on 12-16 May 2008 at Prague, Czech Republic provides 3GPP Draft S2-083218 which includes a contribution about UE Detection of Trusted/Untrusted properties of non-3GPP IP Access made by Ericsson. In this contribution, different alternatives for how a UE detects whether a non-3GPP IP access shall be considered trusted or untrusted.
3GPP TS 24.302 V0.4.0 (2008-05), i.e., "3rd Generation Partnership Project; Technical Specification Group Core Network and Terminals; Access to the 3GPP Evolved Packet Core (EPC) via non-3GPP access networks; Stage 3; (release 8) "provides discovery and network selection procedures for access to 3GPP Evolved Packet Core (EPC) via non-3GPP access networks and includes Authentication and Access Authorization using Authentication, Authorization and Accounting (AAA) procedures used for the interworking of the 3GPP EPC and the non-3GPP access networks.

### SUMMARY OF THE INVENTION

The object of the present invention is at least to obtain the trust type of the non 3gpp access system.

In order to achieve the above object, the present invention provides a method for obtaining the trust type of a non-3GPP access system, which includes the following steps: the UE establishing an underlying link to a non-3GPP access system selected by the UE; the UE initiating an access authentication request, and sending the identification information of the UE and the information of the non-3GPP access system to an AAA (Authentication, Authorization, Accounting) server through the non-3GPP
access system; the UE receiving the access authentication response and the trust type of the non-3GPP access system, and the trust type of the non-3GPP access system. The trust type is determined by the AAA server based on the identification information of the UE, the information of the non-3GPP access system and the operator's strategy.

In one embodiment of the method, before the UE establishes an underlying link to a non-3GPP access system selected by the UE, it further comprises: UE discovering and selecting the non-3GPP access system and receiving the information of the non-3GPP access system from the ANDSF entity.

In one embodiment of the method, the step of the UE initiating an access authentication procedure and sending the identification information of the UE and the information of the non-3GPP access system to an AAA server through the non-3GPP access system with the following steps: the UE sending the non-3GPP access authentication request to the non-3GPP access system, during the procedure of the non-3GPP access authentication, sending the identification information of the UE and the information of the non-3GPP access system to the non-3GPP access system; and the non-3GPP access system translating the non-3GPP access authentication request to a network access authentication request and then sending the network access authentication request to an AAA server, and during the procedure of the network access authentication, sending the identification information of the UE and the information of the non-3GPP access system to the non-3GPP access system.

In one embodiment of the method, the UE receiving the access authentication response and the trust type of the non-3GPP access system returned from the AAA server includes: the UE receiving the returned access authentication response and the trust type of the non-3GPP access system is included in the returned access authentication response.

In the above embodiment, the access authentication response including the trust type of the non-3GPP access system includes: the AAA server sending the response to network access authentication request to the non-3GPP access system, and the network access authentication response including the trust type of the non-3GPP access system; the non-3GPP access system translating the network access authentication response to the non-3GPP access authentication response and then sending it to the UE, the non-3GPP access authentication response includes the trust type of the non-3GPP access system.

In one embodiment of the method, the step of the trust type of the non-3GPP access system being determined by the AAA server based on the identification information of the UE and the information of the non-3GPP access system further includes: the AAA server obtaining the subscription data of the UE based on the identification information of the UE; the AAA server determining the trust type of the non-3GPP access system based on the subscription data of the UE, the information of the non-3GPP access system and the operator's strategy.

In one embodiment of the method, after the UE receiving the returned access authentication response and the trust type of the non-3GPP access system, the method further includes: the UE deciding whether to use the ePDG entity based on the trust type of the non-3GPP access system or not to access the EPS system.

In order to achieve the above object, on the other hand, the present invention also provides a method for obtaining a trust type of a non-3GPP access system, which includes the following steps: a non-3GPP access system and a UE establishing a underlying link; the non-3GPP access system translating the non-3GPP access authentication request of the UE to the network access authentication request and sending the network access authentication request to an AAA server, and sending the identification information sent by the UE and the information of the non-3GPP access system to the AAA server; the non-3GPP access system translating the network access authentication response that including the trust type of the non-3GPP access system to a non-3GPP access authentication response and then sending the non-3GPP access authentication response to the UE, the UE obtaining the trust type of the non-3GPP access system based on the received non-3GPP access authentication response.

In one embodiment of the method, the trust type of the non-3GPP access system is determined by the AAA server based on the identification information of the UE and the information of the non-3GPP access system.

In one embodiment of the method, the step of the trust type of the non-3GPP access system being determined by the AAA server based on the identification information of the UE, the information of the non-3GPP access system and the operator's strategy further includes: the AAA server obtaining the subscription data of the UE based on the identification information of the UE; the AAA server determining the trust type of the non-3GPP access system based on the subscription data of the UE and the information of the non-3GPP access system.

In order to achieve the above object, the present invention further provides a method for obtaining a trust type of a non-3GPP access system with the following steps: an AAA server receiving a non-3GPP access authentication request initiated by a UE via a non-3GPP access system, and the identification information of the UE and the information of the non-3GPP access system which are sent by the non-3GPP access system; the AAA server determining the trust type of the non-3GPP access system based on the identification information of the UE, the information of the non-3GPP access system and the operator's strategy; the AAA server sending a the access authentication response including the trust type of the non-3GPP access system to the UE.

In one embodiment of the method, the step of the AAA server determining the trust type of the non-3GPP access system based on the identification information of the UE and the information of the non-3GPP access system further includes: the AAA server obtaining the subscription data of the UE based on the identification information of the UE; the AAA server determining the trust type of the non-3GPP access system based on the subscription data of the UE, the information of the non-3GPP access system and the operator's strategy.

The present invention also provides a method for determining a trust type of the non-3GPP access system with the following steps: an AAA server receiving the identification information of the UE and the information of the non-3GPP access system; the AAA server determining the trust type of the non-3GPP access system based on the identification information of the UE, the information of the non-3GPP access system and the operator's strategy.

In one embodiment of the method, the step of the AAA server determining the trust type of the non-3GPP access system based on the identification information of the UE and the information of the non-3GPP access system further includes: the AAA server obtaining the subscription data of the UE based on the identification information of the UE; the AAA server determining the trust type of the non-3GPP access system based on the subscription data of the UE, the information of the non-3GPP access system and the operator's strategy.

In order to achieve the above object, the present invention provides a system for obtaining the trust type of a non-3GPP access system, which includes: an AAA server, a non-3GPP access system and at least one UE; the UE being configured for initiating a access authentication request to the AAA server through the non-3GPP access system after the UE decides to establish a underlying link to the non-3GPP access system, and during the process of the access authentication request, sending the identification information of the UE and the information of the non-3GPP access system to the AAA server as well as receiving a returned access authentication response from the AAA server and the trust type of the non-3GPP access system; the non-3GPP access system, being configured for translating the access authentication request initiated by the UE and the returned access authentication response from the AAA server; the AAA server, being configured for determining the trust type of the non-3GPP access system based on the identification information of the UE, the information of the non-3GPP access system and the operator's strategy, and sending the determined trust type of the non-3GPP access system through the access authentication response to the UE.

In the embodiment of the above-mentioned system, the system further includes a home subscriber server (HSS) for providing the AAA server with the required subscription data of the UE.

The present invention further provides an user equipment (UE), including an underlying linking module, a access authentication request initiating module, an access authentication response receiving module and a trust type obtaining module, the underlying linking module being configured for establishing an underlying link to the non-3GPP access system selected by the UE; the access authentication request initiating module being configured for initiating an access authentication request to the AAA server through the non-3GPP access system and sending the identification information of the UE and the information of the non-3GPP access system to the AAA server through the non-3GPP access system; the access authentication response receiving module being configured for receiving the returned access authentication response from the AAA server; the trust type obtaining module being configured for parsing the access authentication response received by the access authentication response receiving module to obtain the trust type of the non-3GPP access system which is determined by the AAA server based on the identification information of the UE, the information of the non-3GPP access system and the operator's strategy.

In a specific embodiment, the UE further comprises a discovering and selecting module used for discovering and selecting the non-3GPP access system and receiving the information of the non-3GPP access system through the ANDSF entity.

In a specific embodiment, the UE further comprises a deciding module used for deciding whether to use the ePDG entity based on the trust type of the non-3GPP access system obtained by the trust type obtaining module or not to Access the EPS system.

The present invention further provides a non-3GPP access system which includes: a receiving module, a translating module, an adding module and a sending module, the receiving module, configured for receiving the non-3GPP access authentication request initiated by the UE and the returned network access authentication response from the AAA server; the translating module, configured for translating the non-3GPP access authentication request initiated by the UE to the network access authentication request, and translating the returned network access authentication response from the AAA server to the non-3GPP access authentication response; the adding module, configured for adding the identification information of the UE into the network access authentication request translated by the translating module, and adding the trust type of the non-3GPP access system into the non-3GPP access authentication response translated by the translating module; and the sending module, configured for sending the translated network access authentication request to the AAA server, and sending the translated non-3GPP access authentication response to the UE.

The present invention further provides an AAA server, including a receiving module, a trust type determining module, and an authentication response to sending module, the receiving module, configured for receiving the access authentication request initiated by the UE through the non-3GPP access system, and the identification information of the UE and the information of the non-3GPP access system sent through the non-3GPP access system; the trust type determining module, configured for determining the trust type of the non-3GPP access system based on the identification information of the UE and the information of the non-3GPP access system received by the receiving module and the operator's strategy; and the authentication response sending module, configured for sending the access authentication response that includes the trust type of the non-3GPP access system to the UE.

The present invention further provides an AAA server which includes a receiving module and a trust type determining module, the receiving module, configured for receiving the identification information of the UE and the information of the non-3GPP access system sent by the UE through the non-3GPP access system; the trust type determining module, configured for determining the trust type of the non-3GPP access system based on the identification information of the UE and the information of the non-3GPP access system received by the receiving module and the operator's strategy.

Correspondingly, the present invention also provides a network functional entity used for determining the trust type of the non-3GPP access system, which includes: a receiving module, and a trust type determining module, the receiving module, configured for receiving the identification information of the UE and the information of the non-3GPP access system sent by the UE through the non-3GPP access system; the trust type determining module, configured for determining the trust type of the non-3GPP access system based on the identification information of the UE and the information of the non-3GPP access system received by the receiving module and the operator's strategy.

In the present invention, during the access authentication initiated by the UE, the AAA server determines the trust type of the non-3GPP access system based on the identification information of the UE and the information of the non-3GPP access system, and informs the UE through the non-3GPP access system, so that the UE can obtain the trust type of the non-3GPP access system, and thereby enables the UE to decide whether to use the ePDG entity based on the trust type of the non-3GPP access system or to access the EPS system.

Other aspects and advantages of the present invention will be illustrated in the following description and parts of them will become apparent through the following description or be understood through the embodiments of the present invention.

The invention is defined by the independent claims. Preferred embodiments are set out in the dependent claims.

### BRIEF DESCRIPTION OF THE DRAWINGS

The above and/or other aspects and advantages of the present invention will become apparent and easily understandable through the following description of the embodiments in conjunction with accompanying drawings, wherein:
Fig. 1 is a schematic view showing system architecture of handover UE to a non-3GPP access system in 3GPP protocol;
Fig. 2 is a flowchart showing a UE is handed over to a non-3GPP access system in 3GPP protocol,
Fig. 3 is a flowchart showing a method for obtaining a trust type of a non-3GPP access system according to Embodiment 1 of the present invention,
Fig. 4 is a flowchart showing a method for obtaining a trust type of a non-3GPP access system according to Embodiment 2 of the present invention,
Fig. 5 is a structural view showing a system for obtaining a trust type of a non-3GPP access system of the present invention,
Fig. 6 is a structural view of an AAA server of the present invention,
Fig. 7 is a structural view of a network functional entity of the present invention.

### DETAILED DESCRIPTION OF THE PRESENT INVENTION

Hereafter, the embodiments of the present invention will be illustrated in detail, and the examples of the embodiments are shown in figures, wherein identical or similar reference numbers designate identical or similar elements or composite parts having identical or similar functions throughout. The following embodiments described with reference to figures are merely examples and are only used to illustrate the present invention rather than being construed as limiting the present invention.

The present invention aims to: when the UE is required to access the EPS system through the non-3GPP access system, the trust type of the non-3GPP access system is determined by devices of a network side during the access authentication procedure, and the determined type is informed to the UE. In this way, not only can the UE obtains the trust type of the non-3GPP access system, but also the trust type of the non-3GPP access system can be determined by devices of the network side according to the operator's strategy. In one embodiment of the present invention, the access type of the non-3GPP access system may be determined and informed to the UE by the AAA server. Preferably, the UE can send a access authentication request including the identification information of the UE and the information of the non-3GPP access system to the AAA server, and the UE is informed of the trust type of the non-3GPP access system determined by the AAA server and the trust type is included in the access authentication response. It should be noted that it is a preferable manner of the present invention to determine the access type of the non-3GPP access system by the AAA server, and the determination may also be performed by other network functional entity. Similarly, it is a preferable manner as well to send the identification information of the UE and the information of the non-3GPP access system by including above information in the access authentication request sent to the AAA server, and this can also be realized by including the identification information of the UE and the information of the non-3GPP access system in an newly defined message and send the newly defined message to the AAA server. Thus, variations similar to the above and understandable for a person skilled in the art should fall within the scope of protection of the embodiments of the present invention.

Hereafter, the preferable solutions of the present invention will be described in detail, however, it does not mean that the present invention can only be realized by the following solutions.

### Embodiment 1:

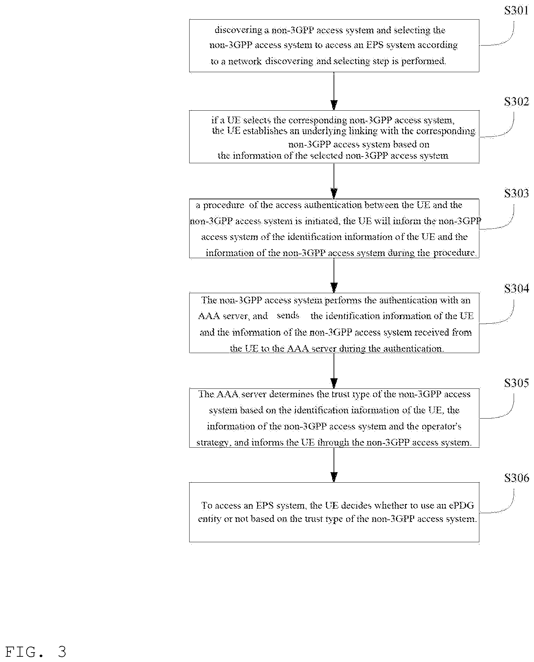

Fig. 3 is a flowchart showing a method for obtaining a trust type of a non-3GPP access system according to Embodiment 1 of the present invention, wherein the method comprises the following steps:
Step 301: an UE discovers a non-3GPP access system and selects it to access an EPS system through the selected non-3GPP access system according to a network discovering and selecting step. For example, when the UE is handed over from a 3GPP access system to the non-3GPP access system, or directly accesses the EPS system from the non-3GPP access system, it will perform the network discovering and selecting procedure. During this procedure, ANDSF may provide the UE with some information of the access system, such as Inter-System mobility strategy and information of the non-3GPP access system (such as PLMN-ID).
Step 302: If the UE selects the corresponding non-3GPP access system, the UE would establish an underlying linking with the corresponding non-3GPP access system according to the selected information of the non-3GPP access system.
Step 303: An access authentication is initiated between the UE and the non-3GPP access system, after the establishment of the underlying link between the UE and the non-3GPP access system. During the access authentication procedure, the UE will inform the non-3GPP access system of PLMN-ID, the identification information of the UE (such as network address identifier MN-NAI) and the access type information and etc. The above access authentication can be performed by EAP (Extensible Authentication Protocol). Please be noted that the access authentication procedure can vary according to different types of the non-3GPP access system. For example, for WLAN, a corresponding EAP authentication is selected, and for Wimax, another EAP authentication will be selected. Furthermore, corresponding to different types of the authentication, there are different numbers of EPA requests and responses. In addition, different types of the access system may also lead to different encapsulation of EAP data packet. Thus, the present invention does not limit to the authentication method adopted in authentication initiated by the UE. In one embodiment of the present invention, during the process when UE initiates the authentication procedure, the identification information of the UE and the information of the non-3GPP access system are sent to the non-3GPP access system.
Step 304: The authentication is performed between the non-3GPP access system and an AAA server, and the non-3GPP access system sends the identification information of the UE and the information of the non-3GPP access system received from the UE to the AAA server during the authentication procedure. In case of roaming, the non-3GPP access system needs to interact with the AAA server through an AAA proxy server.
Step 305: The AAA server determines the trust type of the non-3GPP access system based on the identification information of the UE, the information of the non-3GPP access system and the operator's strategy, and informs the UE of the trust type through the non-3GPP access system. The AAA server can inform the UE of the trust type of the non-3GPP access system according to the subscription data of the user and the rules, such as whether there is a roaming agreement between operators. If the AAA server has no subscription information of the UE, then the AAA server may interact with HHS (Home Subscriber Server) to obtain the subscription data of the UE. Among which, the operator's strategy is configured by the operator of the EPS system, which may be configured into the AAA server, and the configured operator's strategy may be modified flexibly. For example, the AAA server may obtain the operator's information of the non-3GPP access system accessed to the UE according to PLMN ID, and determine the trust type of the non-3GPP access system according to whether there is a valid roaming agreement. If the operator deems that there is a valid roaming agreement with the operator of the non-3GPP access system, then the non-3GPP access system can be regarded safe and reliable, thus the AAA server can set the trust type of the non-3GPP access network as Trusted. Otherwise, if the operator deems that the operator of the non-3GPP access network is not reliable or the non-3GPP access system is not safe and reliable based on the information of PLMN ID, RAT type etc., the AAA server sets the trust type of the non-3GPP access system as Untrusted. In one embodiment of the present invention, the AAA server can transmit the trust type of the non-3GPP access system to the UE through the access authentication response, and may select to expand the message of the access authentication response so as to include the trust type. Certainly, the AAA server may also inform the UE through an individual message, either newly defined message or existing message. Similarly, in this step, the AAA server can also send the trust type of the non-3GPP access system to the UE after the access authentication of the UE is successful. If the UE fails to pass the access authentication, then the AAA server is not required to send the trust type of the non-3GPP access system to the UE.
Step 306: To access an EPS system, the UE decides whether to use an ePDG entity or not based on the trust type of the non-3GPP access system. If the type of the non-3GPP access system is trusted, then the UE may continue operating in accordance with Trusted non-3GPP access process or handover process, if the type of the non-3GPP access system is untrusted, then the UE may resort to an ePDG to continue operating in accordance with Untrusted non-3GPP access process or handover process, and then it is necessary to establish an IPSEC tunnel between the UE and the ePDG.

### Embodiment 2:

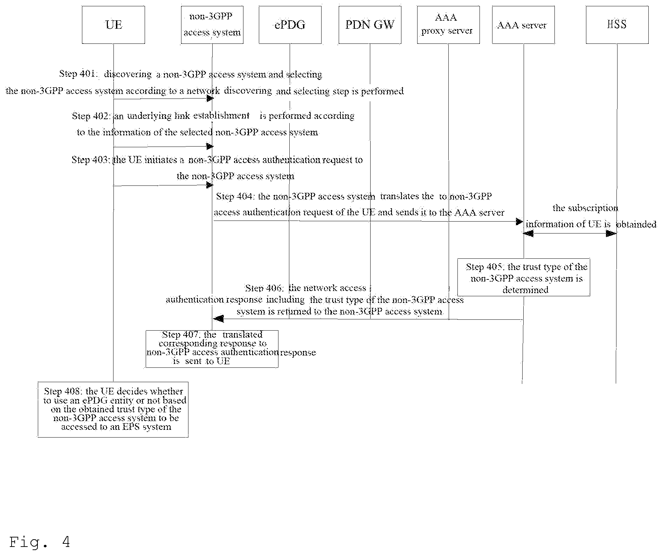

Fig. 4 is a flowchart showing a method for obtaining a trust type of a non-3GPP access system according to Embodiment 2 of the present invention. In order to explain the flow of the present invention in detail, the access authentication between the UE and the non-3GPP access system is referred to as a non-3GPP access authentication which will change depending upon different non-3GPP access systems. If the non-3GPP access system is WLAN, then the access authentication of WLAN will be adopted. If the non-3GPP access system is Wimax, then the access authentication of Wimax will be adopted. Furthermore, the access authentication between the non-3GPP access system and the AAA server is referred to be a network access authentication which includes but not limited to RADIUS (Remote Authentication Dial-In User Service) authentication and Diameter protocol, as well as other network authentication protocols which will appear and be developed in the future. The method comprises the following steps:
Step 401: an UE discovers a non-3GPP access system and selects to access an EPS system through the non-3GPP access system according to a network discovering and selecting process. For example, when the UE is handed over from a 3GPP access system to the non-3GPP access system, or directly accesses the EPS system through the non-3GPP access system, the network discovering and selecting process will be performed. During this process, ANDSF may inform the UE of information of the access system, for example Inter-System mobility strategy and information of the non-3GPP access system (such as PLMN-ID).
Step 402: If the UE selects the corresponding non-3GPP access system, the UE would establish an underlying link with the non-3GPP access system according to the information of the selected non-3GPP access system.
Step 403: The UE initiates a non-3GPP access authentication request to the non-3GPP access system, which can be achieved by performing the extensible authentication protocol EAP. During the process of the non-3GPP access authentication request, the identification information of the UE (such as MN-NAI) and the information of the non-3GPP access system (PLMN-ID, and the access type of the non-3GPP access system etc.) are sent to the non-3GPP access system. Preferably, the UE sends the identification information of the UE and the information of the non-3GPP access system to the non-3GPP access system through the non-3GPP access authentication message.
Step 404: The non-3GPP access system translates the non-3GPP access authentication request sent by the UE and sends it to the AAA server. In particular, the non-3GPP access authentication request is translated to the corresponding network access authentication request such as an RADIUS access authentication request. The identification information of the UE and the information of the non-3GPP access system are sent to the AAA server simultaneously. Preferably, the RADIUS access authentication request may include the identification information of the UE and the information of the non-3GPP access system.
Step 405: The AAA server determines the trust type of the non-3GPP access system based on the identification information of the UE, the information of the non-3GPP access system and the operator's strategy. Among which, the operator's strategy is configured by the operator of the EPS system, which may be configured into the AAA server, and the configured operator's strategy may be modified flexibly. In one embodiment of the present invention, the AAA server can inform the UE of the trust type of the non-3GPP access system according to the subscription data of the user and the rules, such as whether there is a roaming agreement with other operators. If the AAA server has no subscription information of the UE, then the AAA server may interact with HHS to obtain the subscription data of the UE from HHS. For example, the AAA server may obtain the information of the operator to which the UE is accessed according to PLMN ID, and determine the trust type of the non-3GPP access system according to whether there is a valid roaming agreement. If the operator deems that there is a valid roaming agreement with the operator of the non-3GPP access system, then the non-3GPP access system can be regarded safe and reliable, thus the AAA server can set the trust type of the non-3GPP access network as Trusted. Otherwise, if the operator deems that the operator of the non-3GPP access network is not reliable or the non-3GPP access system is not safe and reliable based on the information such as PLMN ID, RAT type, then the AAA server sets the trust type of the non-3GPP access system as Untrusted.
Step 406: The AAA server returns a response network access authentication to the non-3GPP access system, wherein the response includes the trust type of the non-3GPP access system. In one embodiment of the present invention, the AAA server will return a successful authentication response to the non-3GPP access system only when the UE is authenticated to access to the non-3GPP access system, wherein the response includes the trust type of the non-3GPP access system. If the AAA server does not agree to grant the access right to UE to the non-3GPP access system, then successful authentication response will be not be returned.
Step 407: The non-3GPP access system translates the network access authentication response to the corresponding non-3GPP access authentication response and send the non-3GPP access authentication response to the UE. For example, a RADIUS access authentication response is translated to the corresponding the WLAN access authentication response. Furthermore, the translated response to non-3GPP access authentication also includes the trust type of the non-3GPP access system determined by the AAA server.
Step 408: UE obtains the trust type of the non-3GPP access system based on the received non-3GPP access authentication response, and decides whether to use an ePDG entity or not based on the obtained trust type of the non-3GPP access system to be accessed to an EPS system. If the type of the non-3GPP access system is trusted, then the UE may continue operating in accordance with Trusted non-3GPP access process or handover process, if the type of the non-3GPP access system is untrusted, then the UE may resort to an ePDG to continue operating in accordance with Untrusted non-3GPP access process or handover process, and it is necessary to establish an IPSEC tunnel between the UE and the ePDG.

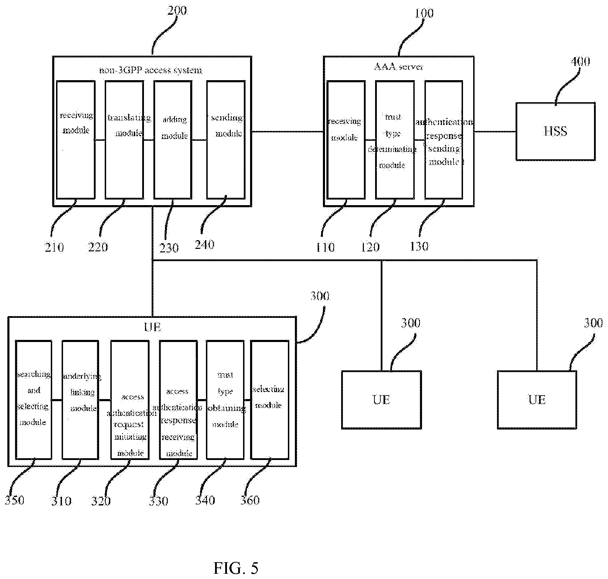

Fig. 5 is a structural view showing a system for obtaining a trust type of a non-3GPP access system of the present invention, wherein the system includes: an AAA server 100, a non-3GPP access system 200 and at least one UE 300. The UE 300 initiates a access authentication request to the AAA server 100 through the non-3GPP access system 200 after the UE 300 selects to establish a underlying link with the non-3GPP access system 200, sends the identification information of the UE 300 and the information of the non-3GPP access system to the AAA server 100 during the process of the access authentication request, and receives a returned response access authentication from the AAA server 100 and the trust type of the non-3GPP access system 200 which is determined by the AAA server 100 based on the identification information of the UE 300, the information of the non-3GPP access system and the operator's strategy. The non-3GPP access system 200 is used for translating the access authentication request initiated by the UE 300 and the returned access authentication response to from the AAA server 100. For example, the corresponding access authentication request of WLAN is translated to a RADIUS authentication request, and a RADIUS authentication response is translated to the corresponding access authentication response of WLAN. The AAA server 100 is used to determine the trust type of the non-3GPP access system 200 based on the identification information of the UE 300, the information of the non-3GPP access system 200 and the operator's strategy, and to send the determined trust type of the non-3GPP access system 200 through the access authentication response to the UE 300. In one embodiment of the present invention, The AAA server 100 can inform the UE 300 of the trust type of the non-3GPP access system 200 according to the subscription data of the user and the rules, such as whether there is a roaming agreement with other operators. If the AAA server 100 has no subscription information of the UE 300, then the AAA server 100 may interact with HHS 400 to obtain the subscription data of the UE 300 from the HHS 400. Thus, the system also includes the HHS 400 configured for providing the AAA server 100 with required subscription data of the UE 300. For example, the AAA server 100 may obtain the operator's information of the non-3GPP access system 200 accessed to the UE 300 according to PLMN ID, and determine the trust type of the non-3GPP access system 200 according to whether there is a valid roaming agreement. If the operator deems that there is a valid roaming agreement with the operator of the non-3GPP access system 200, then the non-3GPP access system 200 can be regarded safe and reliable, thus the AAA server 100 can set the trust type of the non-3GPP access network 200 as Trusted. Otherwise, if the operator deems that the operator of the non-3GPP access system 200 is not reliable or the non-3GPP access system 200 is not safe and reliable based on the information such as PLMN ID, RAT type, then the AAA server 100 sets the trust type of the non-3GPP access system 200 as Untrusted.

The user equipment (UE) 300 includes a underlying linking module 310, an access authentication request initiating module 320, an access authentication response receiving module 330 and a trust type obtaining module 340, wherein the underlying linking module 310 is configured for establishing a underlying link with the non-3GPP access system 200 selected by the UE 300; the access authentication request initiating module 320 is configured for initiating a access authentication request to the AAA server 100 through the non-3GPP access system 200 and sending the identification information of the UE 300 and the information of the non-3GPP access system 200 to the AAA server 100 through the non-3GPP access system 200, wherein the information of the non-3GPP access system 200 can be obtained from ANDSF; the access authentication response receiving module 330 is configured for receiving the response to access authentication returned from the AAA server 100; the trust type obtaining module 340 is configured for parsing the response to access authentication received by the access authentication response receiving module 330 to obtain the trust type of the non-3GPP access system 200 which is determined by the AAA server 100 based on the identification information of the UE 300 (such as MN-NAI), the information of the non-3GPP access system 200 (PLMN-ID, and the access type of the non-3GPP access system etc.) and the operator's strategy.

In one embodiment of the present invention, the above UE 300 further comprises a discovering and selecting module 350 for discovering and selecting the non-3GPP access system 200 and receiving the information of the non-3GPP access system 200 through the ANDSF entity.

In another embodiment of the present invention, the above UE 300 further comprises a deciding module 360 for deciding whether UE use the ePDG entity or not based on the trust type of the non-3GPP access system 200 obtained by the trust type obtaining module 340 to access the EPS system.

The non-3GPP access system 200 includes: a receiving module 210, a translating module 200, an adding module 230 and a sending module 240. The receiving module 210 is used to receive the non-3GPP access authentication request initiated by the UE 300 and the returned network access authentication response from the AAA server 100. The translating module 220 is used to translate the non-3GPP access authentication request initiated by the UE 300 to the network access authentication request, and translate the returned network access authentication response from the AAA server 100 to the non-3GPP access authentication response. For example, the corresponding access authentication request of WLAN is translated to the RADIUS authentication request, and the RADIUS authentication response is translated to the corresponding access authentication response of WLAN. The adding module 230 is used to add the identification information of the UE 300 into the network access authentication request translated by the translating module 220, and add the trust type of the non-3GPP access system 200 into the non-3GPP access authentication response translated by the translating module 220.The sending module 240 is used to send the translated network access authentication request to the AAA server 100, and transmit the translated non-3GPP access authentication response to the UE 300.

The AAA server 100 includes a receiving module 110, a trust type determining module 120, and an authentication response sending module 130. The receiving module 110 is used to receive an access authentication request initiated by the UE 300 through the non-3GPP access system 200, and the identification information of the UE 300 and the information of the non-3GPP access system sent by the non-3GPP access system 200. The trust type determining module 130 is used to determine the trust type of the non-3GPP access system based on the identification information of the UE 300 and the information of the non-3GPP access system received by the receiving module 110 as well as the operator's strategy. The authentication response sending module 130 is used to send the trust type of the non-3GPP access system 200 included in the access authentication response to the UE 300.

Through the above system, during procedure of the access authentication initiated by the UE, the AAA server can determine the trust type of the non-3GPP access system based on the identification information of the UE and the information of the non-3GPP access system, and the operator's strategy, informs the UE through the non-3GPP access system to enable the UE to obtain the trust type of the non-3GPP access system. Therefore, the UE is capable of deciding whether to use the ePDG entity or not based on the trust type of the non-3GPP access system to access the EPS system.

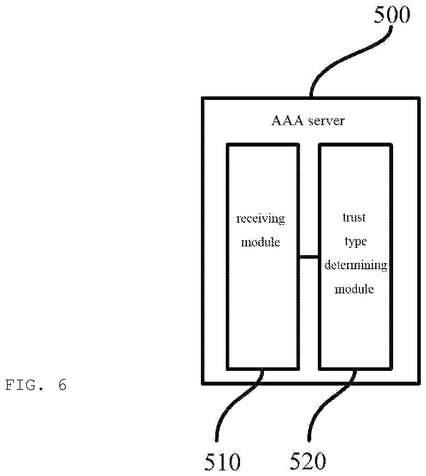

In the embodiment of the present invention, it further provides an AAA server for determining the trust type of the non-3GPP access system. Fig. 6 is a structural view of the AAA server of the present invention. The AAA server 500 can determine the trust type of the non-3GPP access system 200 based on the identification information of the UE 300 and the information of the non-3GPP access system 200, and this AAA server 500 includes a receiving module 510, and a trust type determining module 520. The receiving module 510 is used to receive the identification information of the UE 300 (MN-NAI etc.) and the information of the non-3GPP access system 200 (PLMN-ID, the access type of the non-3GPP access system etc.) sent by the UE 300 through the non-3GPP access system 200. The trust type determining module 520 is used to determine the trust type of the non-3GPP access system 200 based on the identification information of the UE 300 and the information of the non-3GPP access system 200 received by the receiving module 510, and the operator's strategy allocated on the AAA server 500.

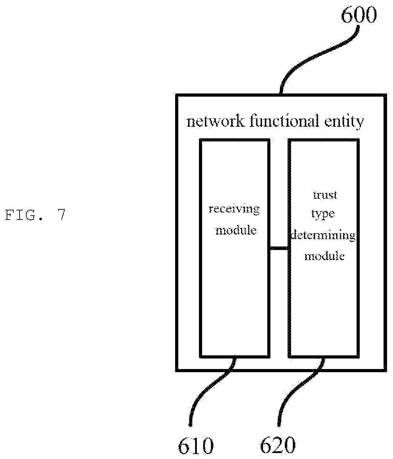

However, the above-mentioned way to determine the access type of the non-3GPP access system by the AAA server is only one way to realize the function by the present invention, and it can also be realized by other network functional entities. Thus, the present invention provides a further network functional entity for determining the trust type of the non-3GPP access system. Fig. 7 is a structural view of a network functional entity 600 of the present invention which includes: a receiving module 610, and a trust type determining module 620. The receiving module 610 is used to receive the identification information of the UE 300 and the information of the non-3GPP access system 200 sent by the UE 300 through the non-3GPP access system 200. The trust type determining module 620 is used to determine the trust type of the non-3GPP access system 200 based on the identification information of the UE 300 and the information of the non-3GPP access system 200 received by the receiving module 610, and the allocated operator's strategy.

In the present invention, during procedure of the access authentication initiated by the UE, the AAA server can determine the trust type of the non-3GPP access system based on the identification information of the UE and the information of the non-3GPP access system, and the operator's strategy, and informs the UE through the non-3GPP access system to enable the UE to obtain the trust type of the non-3GPP access system. Therefore, the UE is capable of deciding whether to use the ePDG entity or not based on the trust type of the non-3GPP access system to access the EPS system.

The embodiments of the present invention have been shown and described in the above, and a person skilled in the art could subject these embodiments to various variations, modifications, substitutions and transformations without departing from the principle of the present invention, and the scope of protection of the present invention is defined by the appended claims and equivalents thereof.

## Claims

1. A method for obtaining a trust type of a non-3GPP access system, comprising:
a user equipment UE establishing (S402) a underlying link with a non-3GPP access system selected by the UE;
**characterized in that**,
the UE initiating (S403) a non-3GPP access authentication request to the non-3GPP access system and sending identification information of the UE and information of the non-3GPP access system to an Authentication, Authorization, Accounting AAA server through the non-3GPP access system; and
the UE receiving a returned access authentication response and the trust type of the non-3GPP access system, and the trust type of the non-3GPP access system being determined by the AAA server based on the identification information of the UE, the information of the non-3GPP access system and an operator's strategy.

2. The method for obtaining a trust type of a non-3GPP access system of claim 1, **characterized in that** before the UE establishes the underlying link with the non-3GPP access system selected by the UE, the method further comprises:
the UE discovering and selecting (S401) the non-3GPP access system and receiving the information of the non-3GPP access system from an Access Network Discovery and Selection Function (ANDSF) entity,
the step of the UE initiating (S403) a non-3GPP access authentication request to the non-3GPP access system and sending identification information of the UE and information of the non-3GPP access system to an AAA server through the non-3GPP access system, further comprises the following steps:
during a process of the non-3GPP access authentication request, sending the identification information of the UE and the information of the non-3GPP access system to the non-3GPP access system,
the non-3GPP access system (S404) translating the non-3GPP access authentication request to a network access authentication request and then sending the network access authentication request to the AAA server, and during a process of the network access authentication request, sending the identification information of the UE and the information of the non-3GPP access system to the AAA server,
the step of the UE receiving a returned access authentication response and the trust type of the non-3GPP access system comprises:
the UE receiving the returned access authentication response including the trust type of the non-3GPP access system, wherein the returned access authentication response including the trust type of the non-3GPP access system is an non-3GPP access authentication response; and
the non-3GPP access authentication response is sent to the UE through the following steps:
the AAA server sending (S406) the network access authentication response to the non-3GPP access system, and the network access authentication response including the trust type of the non-3GPP access system, and
the non-3GPP access system translating (S407) the network access authentication response to the non-3GPP access authentication response and then sending the non-3GPP access authentication response to the UE, the non-3GPP access authentication response including the trust type of the non-3GPP access system;
the trust type of the non-3GPP access system being determined by the AAA server based on the identification information of the UE, the information of the non-3GPP access system and an operator's strategy comprises:
the AAA server obtaining subscription data of the UE based on the identification information of the UE, and
the AAA server determining the trust type of the non-3GPP access system based on the subscription data of the UE, the information of the non-3GPP access system and the operator's strategy,
after the UE receiving a returned access authentication response and the trust type of the non-3GPP access system, the method further comprises:
the UE deciding whether to use an evolved packet data gate ePDG entity or not based on the trust type of the non-3GPP access system to access an evolved packet system EPS system.

3. A method for obtaining a trust type of a non-3GPP access system, comprising:
a non-3GPP access system establishing a underlying link with an UE;
**characterized in that**, the method further comprises:
the non-3GPP access system translating a non-3GPP access authentication request of the UE to a network access authentication request and sending the network access authentication request to an Authentication, Authorization, and Accounting AAA server, and
sending identification information sent by the UE and information of the non-3GPP access system to the AAA server; and
the non-3GPP access system translating a network access authentication response including the trust type of the non-3GPP access system to an non-3GPP access authentication response and then sending the non-3GPP access authentication response to the UE so that the UE obtains the trust type of the non-3GPP access system based on the non-3GPP access authentication response.

4. The method for obtaining a trust type of a non-3GPP access system of claim 3, **characterized in that**, the trust type of the non-3GPP access system is determined by the AAA server based on the identification information of the UE, the information of the non-3GPP access system and the operator's strategy, and the step of the trust type of the non-3GPP access system being determined by the AAA server based on the identification information of the UE, the information of the non-3GPP access system and the operator's strategy comprises:
the AAA server obtaining subscription data of the UE based on the identification information of the UE; and
the AAA server determining the trust type of the non-3GPP access system based on the subscription data of the UE, the information of the non-3GPP access system and the operator's strategy.

5. A method for obtaining a trust type of a non-3GPP access system, **characterized in that**, the method comprises:
an Authentication, Authorization, Accounting AAA server receiving an non-3GPP access authentication request initiated by a user equipment UE through a non-3GPP access system, and receiving identification information of the UE and information of the non-3GPP access system sent by the UE through the non-3GPP access system;
the AAA server determining the trust type of the non-3GPP access system based on the identification information of the UE, the information of the non-3GPP access system and an operator's strategy;
the AAA server sending an access authentication response comprising the trust type of the non-3GPP access system to the UE through the non-3GPP access system.

6. The method for obtaining a trust type of a non-3GPP access system of claim 5, **characterized in that**, the step of the AAA server determining the trust type of the non-3GPP access system based on the identification information of the UE and the information of the non-3GPP access system and an operator's strategy comprises:
the AAA server obtaining subscription data of the UE based on the identification information of the UE; and
the AAA server (S405) determining the trust type of the non-3GPP access system based on the subscription data of the UE, the information of the non-3GPP access system and the operator's strategy.

7. A system for obtaining a trust type of a non-3GPP access system, comprising an Authentication, Authorization, Accounting AAA server (100), a non-3GPP access system (200) and at least one UE (300);
**characterized in that**,
the at least one UE (300) is configured for initiating a non-3GPP access authentication request to the AAA server (100) through the non-3GPP access system (200) after the at least one UE (300) decides to establish a underlying link with the non-3GPP access system (200), and during a process of the non-3GPP access authentication request, sending identification information of the UE (300) and information of the non-3GPP access system (200) to the AAA server (100), as well as receiving a returned access authentication response from the AAA server (100) and the trust type of the non-3GPP access system (200);
the non-3GPP access system (200) is configured for translating the non-3GPP access authentication request initiated by the UE (300) and the returned access authentication response from the AAA server (100); and
the AAA server (100) is configured for determining the trust type of the non-3GPP access system (200) based on the identification information of the UE (300), the information of the non-3GPP access system (200) and an operator's strategy, and sending the determined trust type of the non-3GPP access system (200) through the access authentication response to the UE (300).

8. The system for obtaining a trust type of a non-3GPP access system of claim 7, **characterized in that**, the system further comprises a home subscriber server HSS (400) configured for providing the AAA server (100) with subscription data of the UE (300) .

9. A user equipment UE (300), comprising a underlying linking module (310) configured for establishing a underlying link to a non-3GPP access system selected by the UE (300); **characterized in that**,
the UE (300) further comprises an access authentication request initiating module (320), an access authentication response receiving module (330) and a trust type obtaining module (340),
the access authentication request initiating module (320) is configured for initiating a non-3GPP access authentication request to an Authentication, Authorization, Accounting AAA server through the non-3GPP access system and sending identification information of the UE (300) and information of the non-3GPP access system to the AAA server through the non-3GPP access system;
the access authentication response receiving module (330) is configured for receiving a returned access authentication response from the AAA server; and
the trust type obtaining module (340) is configured for parsing the access authentication response received by the access authentication receiving module; obtaining the trust type of the non-3GPP access system which is determined by the AAA server based on the identification information of the UE, the information of the non-3GPP access system and an operator's strategy.

10. The user equipment UE of claim 9, **characterized in that**, the UE (300) further comprises a discovering and selecting module (360) configured for discovering and selecting the non-3GPP access system and receiving the information of the non-3GPP access system through an Access Network Discovery and Selection Function ANDSF entity,
the UE further comprises a deciding module configured for deciding whether use an evolved packet data gate ePDG entity or not based on the trust type of the non-3GPP access system obtained by the trust type obtaining module to access an evolved packet system EPS system.

11. A non-3GPP access system, **characterized in that**, the non-3GPP access system comprises: a receiving module (210), a translating module (220), an adding module (230) and a sending module (240),
the receiving module (210) is configured for receiving an non-3GPP access authentication request initiated by a User Equipment UE and a returned network access authentication response from the AAA server;
the translating module (220) is configured for translating the non-3GPP access authentication request initiated by the UE to a network access authentication request, and translating the returned network access authentication response from the AAA server to a non-3GPP access authentication response;
the adding module (230) is configured for adding identification information of the UE into the network access authentication request translated by the translating module, and adding the trust type of the non-3GPP access system into the non-3GPP access authentication response translated by the translating module; and
the sending module (240) is configured for sending the translated network access authentication request to the AAA server, and sending the translated non-3GPP access authentication response to the UE.

12. An Authentication, Authorization and Accounting AAA server, **characterized in that**, the AAA server comprises a receiving module (110), a trust type determining module (120), and an authentication response sending module (130),
the receiving module (110) is configured for receiving a non-3GPP access authentication request initiated by a User Equipment UE through a non-3GPP access system, and identification information of the UE and information of the non-3GPP access system sent by the non-3GPP access system;
the trust type determining module (120) is configured for determining a trust type of the non-3GPP access system based on the identification information of the UE and the information of the non-3GPP access system received by the receiving module and an operator's strategy; and
the authentication response sending module (130) is configured for sending a non-3GPP access authentication response including the trust type of the non-3GPP access system to the UE through the non-3GPP access system.

## Patentansprüche

1. Verfahren zum Erzielen einer vertrauenswürdigen Art eines Nicht-3GPP-Zugangssystems, Folgendes umfassend:
dass eine Benutzerausrüstung (UE) eine zugrundeliegende Verbindung mit einem durch die UE ausgewählten Nicht-3GPP-Zugangssystem einrichtet (S402),
dass die UE eine Nicht-3GPP-Zugangsauthentifizierungsanfrage an das Nicht-3GPP-Zugangssystem initiiert (S403) und über das Nicht-3GPP-Zugangssystem Identifikationsinformationen der UE und Informationen des Nicht-3GPP-Zugangssystems an einen Authentifizierungs-, Autorisierungs-, Abrechnungs-Server AAA sendet, und
dass die UE eine zurückgegebene Zugangsauthentifizierungsantwort und die vertrauenswürdige Art des Nicht-3GPP-Zugangssystems empfängt und in der die vertrauenswürdige Art des Nicht-3GPP-Zugangssystems durch den AAA-Server basierend auf den Identifikationsinformationen der UE, den Informationen des Nicht-3GPP-Zugangssystems und einer Bedienerstrategie bestimmt wird.

2. Verfahren zum Erzielen einer vertrauenswürdigen Art eines Nicht-3GPP-Zugangssystems nach Anspruch 1, **dadurch gekennzeichnet, dass** das Verfahren vor dem Einrichten der zugrundeliegenden Verbindung mit dem durch die UE ausgewählten Nicht-3GPP-Zugangssystem durch die UE Folgendes umfasst:
die UE das Nicht-3GPP-Zugangssystem erkennt und auswählt (S401) und die Informationen des Nicht-3GPP-Zugangssystems von einer Entität einer Funktion zur Erkennung und Auswahl eines Zugangsnetzwerks (ANDSF) - Access Network Discovery and Selection Function) empfängt,
wobei der Schritt des Initiierens (S403) einer Nicht-3GPP-Zugangsauthentifizierungsanfrage an das Nicht-3GPP-Zugangssystem durch die UE und des Sendens von Identifikationsinformationen der UE und von Informationen des Nicht-3GPP-Zugangssystems an einen AAA-Server durch das Nicht-3GPP-Zugangssystem ferner die folgenden Schritte umfasst:
dass während eines Prozesses der Nicht-3GPP-Zugangsauthentifizierungsanfrage, die Identifikationsinformationen der UE und die Informationen des Nicht-3GPP-Zugangssystems an das Nicht-3GPP-Zugangssystem gesendet werden,
dass das Nicht-3GPP-Zugangssystem die Nicht-3GPP-Zugangsauthentifizierungsanfrage in eine Netzwerk-Zugangsauthentifizierungsanfrage übersetzt (S404) und dann die Netzwerk-Zugangsauthentifizierungsanfrage an den AAA-Server sendet, und während eines Prozesses der Netzwerk-Zugangsauthentifizierungsanfrage die Identifikationsinformationen der UE und die Informationen des Nicht-3GPP-Zugangssystems an den AAA-Server sendet,
wobei der Schritt des Empfangens einer zurückgegebenen Zugangsauthentifizierungsantwort und der vertrauenswürdigen Art des Nicht-3GPP-Zugangs durch die UE Folgendes umfasst:
dass die UE die zurückgegebene Zugangsauthentifizierungsantwort empfängt, welche die vertrauenswürdige Art des Nicht-3GPP-Zugangssystems beinhaltet, wobei die zurückgegebene Zugangsauthentifizierungsantwort, welche die vertrauenswürdige Art des Nicht-3GPP-Zugangssystems beinhaltet, eine Nicht-3GPP-Zugangsauthentifizierungsantwort ist, und
dass die Nicht-3GPP-Zugangsauthentifizierungsantwort über die folgenden Schritte an die UE gesendet wird,
der AAA-Server sendet (S406) die Netzwerk-Zugangsauthentifizierungsantwort an das Nicht-3GPP-Zugangssystem und die Netzwerk-Zugangsauthentifizierungsantwort beinhaltet die vertrauenswürdige Art des Nicht-3GPP-Zugangssystems und
das Nicht-3GPP-Zugangssystem übersetzt die Netzwerk-Zugangsauthentifizierungsantwort in die Nicht-3GPP-Zugangsauthentifizierungsantwort übersetzt (S407) und sendet dann die Nicht-3GPP-Zugangsauthentifizierungsantwort an die UE, wobei die Nicht-3GPP-Zugangsauthentifizierungsantwot die vertrauenswürdige Art des Nicht-3GPP-Zugangssystems beinhaltet,
wobei das Bestimmen der vertrauenswürdigen Art des Nicht-3GPP-Zugangsystems durch den AAA-Server basierend auf den Identifikationsinformationen der UE, den Informationen des Nicht-3GPP-Zugangssystems und einer Bedienerstrategie Folgendes umfasst:
dass der AAA-Server Abonnementdaten der UE basierend auf den Identifikationsinformationen der UE erhält und
dass der AAA-Server die vertrauenswürdige Art des Nicht-3GPP-Zugangssystems basierend auf den Abonnementdaten der UE, den Informationen des Nicht-3GPP-Zugangssystems und der Bedienerstrategie bestimmt,
wobei das Verfahren nach dem Empfangen einer zurückgegebenen Zugangsauthentifizierungsantwort und der vertrauenswürdigen Art des Nicht-3GPP-Zugangsystems durch die UE Folgendes umfasst:
dass die UE basierend auf der vertrauenswürdigen Art des Nicht-3GPP-Zugangsystems entscheidet, ob eine ePDG-(evolved-Packet-Data-Gate)Entität zu verwenden ist oder nicht, um auf ein EPS-System (Evolved Packet System) zuzugreifen.

3. Verfahren zum Erzielen einer vertrauenswürdigen Art eines Nicht-3GPP-Zugangssystems, Folgendes umfassend:
dass ein Nicht-3GPP-Zugangssystem eine zugrundeliegende Verbindung mit einer UE einrichtet,
**dadurch gekennzeichnet, dass** das Verfahren ferner Folgendes umfasst:
dass das Nicht-3GPP-Zugangssystem eine Nicht-3GPP-Zugangsauthentifizierungsanfrage der UE in eine Netzwerk-Zugangsauthentifizierungsanfrage übersetzt und die Netzwerk-Zugangsauthentifizierungsanfrage an einen Authentifizierungs-, Autorisierungs-, Abrechnungs-Server (AAA-Server) sendet und
dass von der UE gesendete Identifikationsinformationen und Informationen des Nicht-3GPP-Zugangssystems an den AAA-Server gesendet werden und
dass das Nicht-3GPP-Zugangssystem eine Netzwerk-Zugangsauthentifizierungsantwort, welche die vertrauenswürdige Art des Nicht-3GPP-Zugangssystems beinhaltet, in eine Nicht-3GPP-Zugangsauthentifizierungsantwort übersetzt und dann die Nicht-3GPP-Zugangsauthentifizierungsantwort an die UE sendet, so dass die UE die vertrauenswürdige Art des Nicht-3GPP-Zugangssystems basierend auf der Nicht-3GPP-Zugangsauthentifizierungsantwort erzielt.

4. Verfahren zum Erzielen einer vertrauenswürdigen Art eines Nicht-3GPP-Zugangssystems nach Anspruch 3, **dadurch gekennzeichnet, dass** die vertrauenswürdige Art des Nicht-3GPP-Zugangssystems durch den AAA-Server basierend auf den Identifikationsinformationen der UE, den Informationen des Nicht-3GPP-Zugangssystems und der Bedienerstrategie bestimmt wird und der Schritt des Bestimmens der vertrauenswürdigen Art des Nicht-3GPP-Zugangsystems durch den AAA-Server basierend auf den Identifikationsinformationen der UE, den Informationen des Nicht-3GPP-Zugangssystems und der Bedienerstrategie Folgendes umfasst:
dass der AAA-Server Abonnementdaten der UE basierend auf dem Identifikationsinformationen der UE erzielt und
dass der AAA-Server die vertrauenswürdige Art des Nicht-3GPP-Zugangssystems basierend auf den Abonnementdaten der UE, den Informationen des Nicht-3GPP-Zugangssystems und der Bedienerstrategie bestimmt.

5. Verfahren zum Erzielen einer vertrauenswürdigen Art eines Nicht-3GPP-Zugangssystems, **dadurch gekennzeichnet, dass** das Verfahren Folgendes umfasst:
dass ein Authentifizierungs-, Autorisierungs-, Abrechnungs-Server (AAA-Server) eine Nicht-3GPP-Zugangsauthentifizierungsanfrage empfängt, die durch eine Benutzerausrüstung (UE) über ein Nicht-3GPP-Zugangssystem initiiert wird, und Identifikationsinformationen der UE und Informationen des Nicht-3GPP-Zugangssystems empfängt, die durch die UE über das Nicht-3GPP-Zugangssystem gesendet werden,
dass der AAA-Server die vertrauenswürdige Art des Nicht-3GPP-Zugangssystems basierend auf den Abonnementdaten der UE, den Informationen des Nicht-3GPP-Zugangssystems und einer Bedienerstrategie bestimmt,
dass der AAA-Server eine Zugangsauthentifizierungsantwort, welche die vertrauenswürdige Art des Nicht-3GPP-Zugangssystems beinhaltet, über das Nicht-3GPP-Zugangssystem an die UE sendet.

6. Verfahren zum Erzielen einer vertrauenswürdigen Art eines Nicht-3GPP-Zugangssystems nach Anspruch 5, **dadurch gekennzeichnet, dass** der Schritt des Bestimmens der vertrauenswürdigen Art des Nicht-3GPP-Zugangsystems durch den AAA-Server basierend auf den Identifikationsinformationen der UE und den Informationen des Nicht-3GPP-Zugangssystems und einer Bedienerstrategie Folgendes umfasst:
dass der AAA-Server Abonnementdaten der UE basierend auf den Identifikationsinformationen der UE erhält und
dass der AAA-Server die vertrauenswürdige Art des Nicht-3GPP-Zugangssystems basierend auf den Teilnehmerdaten der UE, den Informationen des Nicht-3GPP-Zugangssystems und der Bedienerstrategie bestimmt (S405).

7. System zum Erhalt einer vertrauenswürdigen Art eines Nicht-3GPP-Zugangssystems, das einen Authentifizierungs-, Autorisierungs-, Abrechnungs-Server (AAA - Authentication, Authorization, Accounting) (100), ein Nicht-3GPP-Zugangssystem (200) und mindestens eine UE (300) umfasst, **dadurch gekennzeichnet, dass**
die mindestens eine UE (300) dafür konfiguriert ist, eine Nicht-3GPP-Zugangsauthentifizierungsanfrage an den AAA-Server (100) über das Nicht-3GPP-Zugangssystem (200) zu initiieren, nachdem die mindestens eine UE (300) entschieden hat, eine zugrundeliegende Verbindung mit dem Nicht-3GPP-Zugangssystem (200) einzurichten, und während eines Prozesses der Nicht-3GPP-Zugangsauthentifizierungsanfrage Identifikationsinformationen der UE (300) und Informationen des Nicht-3GPP-Zugangssystems an den AAA-Server (100) zu senden sowie eine zurückgegebene Zugangsauthentifizierungsantwort von dem AAA-Server (100) und die vertrauenswürdigen Art des Nicht-3GPP-Zugangsystems (200) zu empfangen,
das Nicht-3GPP-Zugangssystem (200) dafür konfiguriert ist, die Nicht-3GPP-Zugangsauthentifizierungsanfrage, die durch die UE (300) initiiert wird, und die zurückgegebene Zugangsauthentifizierungsantwort vom AAA-Server (100) zu übersetzen, und
der AAA-Server (100) dafür konfiguriert ist, die vertrauenswürdige Art des Nicht-3GPP-Zugangssystems (200) basierend auf den Identifikationsinformationen der UE (300), den Informationen des Nicht-3GPP-Zugangssystems (200) und einer Bedienerstrategie zu bestimmen und die bestimmte vertrauenswürdige Art des Nicht-3GPP-Zugangssystems (200) über die Zugangsauthentifizierungsantwort an die UE (300) zu senden.

8. System zum Erzielen einer vertrauenswürdigen Art eine Nicht-3GPP-Zugangssystems nach Anspruch 7, **dadurch gekennzeichnet, dass** das System ferner einen HSS (Home Subscriber Server) (400) umfasst, der dafür konfiguriert ist, den AAA-Server (100) mit Abonnementdaten der UE (300) zu versorgen.

9. Benutzerausrüstung (UE) (300), ein Modul (310) für eine zugrundeliegende Verbindungseinrichtung umfassend, das dafür konfiguriert ist, eine zugrundeliegende Verbindung mit einem von der UE (300) ausgewählten Nicht-3GPP-Zugangssystem einzurichten,
**dadurch gekennzeichnet, dass**:
die UE (300) ferner ein Modul (320) zum Initiieren einer Zugangsauthentifizierungsanfrage, ein Modul (330) zum Empfangen einer Zugangsauthentifizierungsantwort und ein Modul (340) zum Erzielen einer vertrauenswürdigen Art umfasst,
das Modul (320) zum Initiieren einer Zugangsauthentifizierungsanfrage dafür konfiguriert ist, eine Nicht-3GPP-Zugangsauthentifizierungsanfrage über das Nicht-3GPP-Zugangssystem an einen Authentifizierungs-, Autorisierungs-, Abrechnungs-Server (AAA-Server) zu initiieren und die Identifikationsinformationen der UE (300) und die Informationen des Nicht-3GPP-Zugangssystems über das Nicht-3GPP-Zugangssystem an den AAA-Server zu senden,
das Modul (330) zum Empfangen einer Zugangsauthentifizierungsantwort dafür konfiguriert ist, eine zurückgegebene Zugangsauthentifizierungsantwort von dem AAA-Server zu empfangen, und
das Modul (340) zum Erzielen einer vertrauenswürdigen Art dafür konfiguriert ist, die vom Modul zum Empfangen einer Zugangsauthentifizierungsantwort empfangene Zugangsauthentifizierungsantwort zu analysieren, die vertrauenswürdige Art des Nicht-3GPP-Zugangssystems, die durch den AAA-Server basierend auf den Identifikationsinformationen der UE, den Informationen des Nicht-3GPP-Zugangssystems und einer Bedienerstrategie bestimmt wird, zu erzielen.

10. Benutzerausrüstung (UE) nach Anspruch 9, **dadurch gekennzeichnet, dass** die UE (300) ferner ein Erkennungs- und Auswahlmodul (360) umfasst, das dafür konfiguriert ist, das Nicht-3GPP-Zugangssystem zu erkennen und auszuwählen und die Informationen des Nicht-3GPP-Zugangssystems über eine Entität einer Funktion zur Erkennung und Auswahl eines Zugangsnetzwerks (ANDSF - Access Network Discovery and Selection Function) zu empfangen,
dass die UE ferner ein Entscheidungsmodul umfasst, das dafür konfiguriert ist, basierend auf der vertrauenswürdigen Art des Nicht-3GPP-Zugangsystems, die durch das Modul zum Erzielen einer vertrauenswürdigen Art erzielt wird, zu entscheiden, ob eine ePDG-(evolved-Packet-Data-Gate-)Entität zu verwenden ist oder nicht, um auf ein EPS-System (Evolved Packet System) zuzugreifen.

11. Nicht-3GPP-Zugangssystem, **dadurch gekennzeichnet, dass** das Nicht-3GPP-Zugangssystem Folgendes umfasst: ein Empfangsmodul (210), ein Umwandlungsmodul (220), ein Addiermodul (230) und ein Sendemodul (240), wobei:
das Empfangsmodul (210) dafür konfiguriert ist, eine von einer Benutzerausrüstung (UE) initiierte Nicht-3GPP-Zugangsauthentifizierungsanfrage und eine von dem AAA-Server zurückgegebene Zugangsauthentifizierungsantwort zu empfangen,
das übersetzungsmodul (220) dafür konfiguriert ist, die durch die UE initiierte Nicht-3GPP-Zugangsauthentifizierungsanfrage in eine Netzwerk-Zugangsauthentifizierungsanfrage zu übersetzen und die vom AAA-Server zurückgegebene Zugangsauthentifizierungsantwort in eine Nicht-3GPP-Zugangsauthentifizierungsantwort zu übersetzen,
das Addiermodul (230) dafür konfiguriert ist, die Identifikationsinformationen der UE zu der durch das Umwandlungsmodul umgewandelten Netzwerk-Zugangsauthentifizierungsanfrage zu addieren und die vertrauenswürdige Art des Nicht-3GPP-Zugangssystems zu der durch das Umwandlungsmodul umgewandelten Nicht-3GPP-Zugangsauthentifizierungsantwort zu addieren, und
das Sendemodul (240) dafür konfiguriert ist, die umgewandelte Netzwerk-Zugangsauthentifizierungsanfrage an den AAA-Server zu senden und die umgewandelte Nicht-3GPP-Zugangsauthentifizierungsantwort an die UE zu senden.

12. Authentifizierungs-, Autorisierungs-, Abrechnungs-Server (AAA - Authentication, Authorization, Accounting), **dadurch gekennzeichnet, dass** der AAA-Server ein Empfangsmodul (110), ein Modul (120) zum Bestimmen einer vertrauenswürdigen Art und ein Modul (130) zum Senden einer Authentifizierungsantwort umfasst, wobei:
das Empfangsmodul (110) dafür konfiguriert ist, eine Nicht-3GPP-Zugangsauthentifizierungsanfrage, die von einer Benutzerausrüstung (UE) über ein Nicht-3GPP-Zugangssystem initiiert wird, und Identifikationsinformationen der UE und Informationen des Nicht-3GPP-Zugangssystems, die vom Nicht-3GPP-Zugangssystem gesendet werden, zu empfangen,
das Modul (120) zum Bestimmen einer vertrauenswürdigen Art dafür konfiguriert ist, eine vertrauenswürdige Art des Nicht-3GPP-Zugangssystems basierend auf den Identifikationsinformationen der UE und den Informationen des Nicht-3GPP-Zugangssystems, die von dem Empfangsmodul empfangen werden, sowie einer Bedienerstrategie zu bestimmen, und
das Modul (130) zum Senden einer Authentifizierungsantwort dafür konfiguriert ist, eine Nicht-3GPP-Zugangsauthentifizierungsantwort, welche die vertrauenswürdige Art des Nicht-3GPP-Zugangssystems beinhaltet, über das Nicht-3GPP-Zugangssystem an die UE zu senden.

## Revendications

1. Procédé d'obtention d'un type de confiance d'un système d'accès non-3GPP, comprenant l'étape ci-dessous dans laquelle :
un équipement d'utilisateur, UE, établit (S402) une liaison sous-jacente avec un système d'accès non-3GPP sélectionné par l'équipement UE ;
**caractérisé en ce qu'**il comprend les étapes ci-dessous dans lesquelles,
l'équipement UE initie (S403) une demande d'authentification d'accès non-3GPP au système d'accès non-3GPP et envoie des informations d'identification de l'équipement UE et des informations du système d'accès non-3GPP à un serveur d'authentification, autorisation et comptabilité, AAA, par le biais du système d'accès non-3GPP ; et
l'équipement UE reçoit une réponse d'authentification d'accès renvoyée et le type de confiance du système d'accès non-3GPP, et dans lequel le type de confiance du système d'accès non-3GPP est déterminé par le serveur AAA sur la base des informations d'identification de l'équipement UE, des informations du système d'accès non-3GPP et d'une stratégie de l'opérateur.

2. Procédé d'obtention d'un type de confiance d'un système d'accès non-3GPP selon la revendication 1, **caractérisé en ce que**, avant que l'équipement UE n'établisse la liaison sous-jacente avec le système d'accès non-3GPP sélectionné par l'équipement UE, le procédé comprend en outre l'étape ci-dessous dans laquelle :
l'équipement UE découvre et sélectionne (S401) le système d'accès non-3GPP et reçoit les informations du système d'accès non-3GPP en provenance d'une entité de fonction de découverte et de sélection de réseau d'accès (ANDSF) ;
dans lequel, l'étape dans laquelle l'équipement UE initie (S403) une demande d'authentification d'accès non-3GPP au système d'accès non-3GPP et envoie des informations d'identification de l'équipement UE et des informations du système d'accès non-3GPP, à un serveur AAA, par le biais du système d'accès non-3GPP, comprend en outre les étapes ci-dessous consistant à ou dans lesquelles :
au cours d'un processus de la demande d'authentification d'accès non-3GPP, envoyer les informations d'identification de l'équipement UE et les informations du système d'accès non-3GPP au système d'accès non-3GPP ;
le système d'accès non-3GPP (S404) traduit la demande d'authentification d'accès non-3GPP en une demande d'authentification d'accès réseau et envoie ensuite la demande d'authentification d'accès réseau au serveur AAA, et au cours d'un processus de la demande d'authentification d'accès réseau, envoyer les informations d'identification de l'équipement UE et les informations du système d'accès non-3GPP au serveur AAA ;
dans lequel, l'étape dans laquelle l'équipement UE reçoit une réponse d'authentification d'accès renvoyée et le type de confiance du système d'accès non-3GPP comprend l'étape ci-dessous dans laquelle :
l'équipement UE reçoit la réponse d'authentification d'accès renvoyée incluant le type de confiance du système d'accès non-3GPP, dans lequel la réponse d'authentification d'accès renvoyée incluant le type de confiance du système d'accès non-3GPP est une réponse d'authentification d'accès non-3GPP ; et
dans lequel la réponse d'authentification d'accès non-3GPP est envoyée à l'équipement UE en mettant en oeuvre les étapes ci-dessous dans lesquelles :
le serveur AAA envoie (S406) la réponse d'authentification d'accès réseau au système d'accès non-3GPP, et dans lequel la réponse d'authentification d'accès réseau inclut le type de confiance du système d'accès non-3GPP ; et
le système d'accès non-3GPP traduit (S407) la réponse d'authentification d'accès réseau en la réponse d'authentification d'accès non-3GPP et envoie ensuite la réponse d'authentification d'accès non-3GPP à l'équipement UE, la réponse d'authentification d'accès non-3GPP incluant le type de confiance du système d'accès non-3GPP ;
dans lequel, l'étape dans laquelle le type de confiance du système d'accès non-3GPP est déterminé par le serveur AAA sur la base des informations d'identification de l'équipement UE, des informations du système d'accès non-3GPP et d'une stratégie de l'opérateur comprend les étapes ci-dessous dans lesquelles :
le serveur AAA obtient des données d'abonnement de l'équipement UE sur la base des informations d'identification de l'équipement UE ; et
le serveur AAA détermine le type de confiance du système d'accès non-3GPP sur la base des données d'abonnement de l'équipement UE, des informations du système d'accès non-3GPP et de la stratégie de l'opérateur ;
dans lequel, dès lors que l'équipement UE a reçu une réponse d'authentification d'accès renvoyée et le type de confiance du système d'accès non-3GPP, le procédé comprend en outre l'étape ci-dessous dans laquelle :
l'équipement UE décide s'il convient d'utiliser ou non une entité de passerelle de données par paquets évoluée, ePDG, sur la base du type de confiance du système d'accès non-3GPP pour accéder à un système par paquets évolué, EPS.

3. Procédé d'obtention d'un type de confiance d'un système d'accès non-3GPP, comprenant l'étape ci-dessous dans laquelle
un système d'accès non-3GPP établit une liaison sous-jacente avec un équipement UE ;
**caractérisé en ce que** le procédé comprend en outre les étapes ci-dessous dans lesquelles ou consistant à :
le système d'accès non-3GPP traduit une demande d'authentification d'accès non-3GPP de l'équipement UE en une demande d'authentification d'accès réseau, et envoie la demande d'authentification d'accès réseau à un serveur d'authentification, autorisation et comptabilité, AAA ; et
envoyer des informations d'identification envoyées par l'équipement UE et des informations du système d'accès non-3GPP, au serveur AAA ; et
le système d'accès non-3GPP traduit une réponse d'authentification d'accès réseau incluant le type de confiance du système d'accès non-3GPP en une réponse d'authentification d'accès non-3GPP, et envoie ensuite la réponse d'authentification d'accès non-3GPP à l'équipement UE, de sorte que l'équipement UE obtient le type de confiance du système d'accès non-3GPP sur la base de la réponse d'authentification d'accès non-3GPP.

4. Procédé d'obtention d'un type de confiance d'un système d'accès non-3GPP selon la revendication 3, **caractérisé en ce que** le type de confiance du système d'accès non-3GPP est déterminé par le serveur AAA sur la base des informations d'identification de l'équipement UE, des informations du système d'accès non-3GPP et de la stratégie de l'opérateur, et **en ce que** l'étape dans laquelle le type de confiance du système d'accès non-3GPP est déterminé par le serveur AAA sur la base des informations d'identification de l'équipement UE, des informations du système d'accès non-3GPP et de la stratégie de l'opérateur comprend les étapes ci-dessous dans lesquelles :
le serveur AAA obtient les données d'abonnement de l'équipement UE sur la base des informations d'identification de l'équipement UE ; et
le serveur AAA détermine le type de confiance du système d'accès non-3GPP sur la base des données d'abonnement de l'équipement UE, des informations du système d'accès non-3GPP et de la stratégie de l'opérateur.

5. Procédé d'obtention d'un type de confiance d'un système d'accès non-3GPP, **caractérisé en ce que** le procédé comprend les étapes ci-dessous dans lesquelles :
un serveur d'authentification, autorisation et comptabilité, AAA, reçoit une demande d'authentification d'accès non-3GPP initiée par un équipement d'utilisateur, UE, par le biais d'un système d'accès non-3GPP, et reçoit des informations d'identification de l'équipement UE et des informations du système d'accès non-3GPP envoyées par l'équipement UE par le biais du système d'accès non-3GPP ;
le serveur AAA détermine le type de confiance du système d'accès non-3GPP sur la base des informations d'identification de l'équipement UE, des informations du système d'accès non-3GPP et de la stratégie de l'opérateur ;
le serveur AAA envoie une réponse d'authentification d'accès comprenant le type de confiance du système d'accès non-3GPP à l'équipement UE par le biais du système d'accès non-3GPP.

6. Procédé d'obtention d'un type de confiance d'un système d'accès non-3GPP selon la revendication 5, **caractérisé en ce que** l'étape dans laquelle le serveur AAA détermine le type de confiance du système d'accès non-3GPP sur la base des informations d'identification de l'équipement UE, des informations du système d'accès non-3GPP et de la stratégie de l'opérateur, comprend les étapes ci-dessous dans lesquelles :
le serveur AAA obtient des données d'abonnement de l'équipement UE sur la base des informations d'identification de l'équipement UE ; et
le serveur AAA (S405) détermine le type de confiance du système d'accès non-3GPP sur la base des données d'abonnement de l'équipement UE, des informations du système d'accès non-3GPP et de la stratégie de l'opérateur.

7. Système destiné à obtenir un type de confiance d'un système d'accès non-3GPP, comprenant un serveur d'authentification, autorisation et comptabilité, AAA, (100), un système d'accès non-3GPP (200) et au moins un équipement UE (300) ;
**caractérisé en ce que**,
ledit au moins un équipement UE (300) est configuré de manière à initier une demande d'authentification d'accès non-3GPP au serveur AAA (100) par le biais du système d'accès non-3GPP (200) dès lors que ledit au moins un équipement UE (300) décide d'établir une liaison sous-jacente avec le système d'accès non-3GPP (200), et au cours d'un processus de la demande d'authentification d'accès non-3GPP, à envoyer des informations d'identification de l'équipement UE (300) et des informations du système d'accès non-3GPP (200) au serveur AAA (100), ainsi qu'à recevoir une réponse d'authentification d'accès renvoyée par le serveur AAA (100) et le type de confiance du système d'accès non-3GPP (200) ;
le système d'accès non-3GPP (200) est configuré de manière à traduire la demande d'authentification d'accès non-3GPP initiée par l'équipement UE (300) et la réponse d'authentification d'accès renvoyée en provenance du serveur AAA (100) ; et
le serveur AAA (100) est configuré de manière à déterminer le type de confiance du système d'accès non-3GPP (200) sur la base des informations d'identification de l'équipement UE (300), des informations du système d'accès non-3GPP (200) et d'une stratégie de l'opérateur, et à envoyer le type de confiance déterminé du système d'accès non-3GPP (200), par l'intermédiaire de la réponse d'authentification d'accès, à l'équipement UE (300).

8. Système destiné à obtenir un type de confiance d'un système d'accès non-3GPP selon la revendication 7, **caractérisé en ce que** le système comprend en outre un serveur d'abonné domestique, HSS, (400) configuré de manière à fournir, au serveur AAA (100), des données d'abonnement de l'équipement UE (300).

9. Équipement d'utilisateur, UE, (300), comprenant un module de liaison sous-jacente (310) configuré de manière à établir une liaison sous-jacente avec un système d'accès non-3GPP sélectionné par l'équipement UE (300) ;
**caractérisé en ce que**,
l'équipement UE (300) comprend en outre un module d'initiation de demande d'authentification d'accès (320), un module de réception de réponse d'authentification d'accès (330) et un module d'obtention de type de confiance (340),
le module d'initiation de demande d'authentification d'accès (320) est configuré de manière à initier une demande d'authentification d'accès non-3GPP à un serveur d'authentification, autorisation et comptabilité, AAA, par l'intermédiaire du système d'accès non-3GPP, et à envoyer des informations d'identification de l'équipement UE (300) et des informations du système d'accès non-3GPP, au serveur AAA, par l'intermédiaire du système d'accès non-3GPP ;
le module de réception de réponse d'authentification d'accès (330) est configuré de manière à recevoir une réponse d'authentification d'accès renvoyée par le serveur AAA ; et
le module d'obtention de type de confiance (340) est configuré de manière à analyser la réponse d'authentification d'accès reçue par le module de réception de réponse d'authentification d'accès ; et à obtenir le type de confiance du système d'accès non-3GPP qui est déterminé par le serveur AAA sur la base des informations d'identification de l'équipement UE, des informations du système d'accès non-3GPP et d'une stratégie de l'opérateur.

10. Équipement d'utilisateur, UE, selon la revendication 9, **caractérisé en ce que** l'équipement d'utilisateur, UE, (300), comprend en outre un module de découverte et de sélection (360) configuré de manière à découvrir et sélectionner le système d'accès non-3GPP et à recevoir les informations du système d'accès non-3GPP par l'intermédiaire d'une entité de fonction de découverte et de sélection de réseau d'accès, ANDSF ;
l'équipement UE comprend en outre un module de décision configuré de manière à décider s'il convient d'utiliser ou non une entité de passerelle de données par paquets évoluée, ePDG, sur la base du type de confiance du système d'accès non-3GPP obtenu par le module d'obtention de type de confiance, en vue d'accéder à un système par paquets évolué, EPS.

11. Système d'accès non-3GPP, **caractérisé en ce que** le système d'accès non-3GPP comprend : un module de réception (210), un module de traduction (220), un module d'ajout (230) et un module d'envoi (240) ;
dans lequel le module de réception (210) est configuré de manière à recevoir une demande d'authentification d'accès non-3GPP initiée par un équipement d'utilisateur, UE, et une réponse d'authentification d'accès réseau renvoyée, en provenance du serveur AAA ;
le module de traduction (220) est configuré de manière à traduire la demande d'authentification d'accès non-3GPP initiée par l'équipement UE en une demande d'authentification d'accès réseau, et à traduire la réponse d'authentification d'accès réseau renvoyée, en provenance du serveur AAA, en une réponse d'authentification d'accès non-3GPP ;
le module d'ajout (230) est configuré de manière à ajouter des informations d'identification de l'équipement UE dans la demande d'authentification d'accès réseau traduite par le module de traduction, et à ajouter le type de confiance du système d'accès non-3GPP dans la réponse d'authentification d'accès non-3GPP traduite par le module de traduction ; et
le module d'envoi (240) est configuré de manière à envoyer la demande d'authentification d'accès réseau traduite, au serveur AAA, et à envoyer la réponse d'authentification d'accès non-3GPP traduite, à l'équipement UE.

12. Serveur d'authentification, autorisation et comptabilité, AAA, **caractérisé en ce que** le serveur AAA comprend un module de réception (110), un module de détermination de type de confiance (120), et un module d'envoi de réponse d'authentification (130) ;
dans lequel le module de réception (110) est configuré de manière à recevoir une demande d'authentification d'accès non-3GPP initiée par un équipement d'utilisateur, UE, par l'intermédiaire d'un système d'accès non-3GPP, et des informations d'identification de l'équipement UE ainsi que des informations du système d'accès non-3GPP envoyées par le système d'accès non-3GPP ;
le module de détermination de type de confiance (120) est configuré de manière à déterminer un type de confiance du système d'accès non-3GPP sur la base des informations d'identification de l'équipement UE et des informations du système d'accès non-3GPP reçues par le module de réception, ainsi que d'une stratégie de l'opérateur ; et
le module d'envoi de réponse d'authentification (130) est configuré de manière à envoyer une réponse d'authentification d'accès non-3GPP incluant le type de confiance du système d'accès non-3GPP, à l'équipement UE, par le biais du système d'accès non-3GPP.
